Europäisches Patentamt

European Patent Office

Office européen des brevets

(19)

(11) Veröffentlichungsnummer: **0 109 632**
**A1**

# (12) EUROPÄISCHE PATENTANMELDUNG

(21) Anmeldenummer: **83111333.7**

(22) Anmeldetag: **12.11.83**

(51) Int. Cl.³: **B 23 D 47/00**
**B 27 G 19/02**

(30) Priorität: **18.11.82 DE 3242572**

(43) Veröffentlichungstag der Anmeldung:
**30.05.84 Patentblatt 84/22**

(84) Benannte Vertragsstaaten:
**AT BE CH DE FR GB IT LI LU NL SE**

(71) Anmelder: **Chr. Eisele Maschinenfabrik GmbH & Co. KG.**
**Nürtinger Strasse 9 - 15**
**D-7316 Köngen(DE)**

(72) Erfinder: **Holder, Kurt**
**Kiesweg 24**
**D-7316 Köngen(DE)**

(74) Vertreter: **Hoeger, Stellrecht & Partner**
**Uhlandstrasse 14c**
**D-7000 Stuttgart 1(DE)**

(54) **Schutzgehäuse für das Sägeblatt einer Kreissäge.**

(57) Die Erfindung bezieht sich auf ein Schutzgehäuse für das Sägeblatt einer Kreissäge, bei der das Sägeblatt am freien Ende einer Sägewelle befestigt ist, die ihrerseits an einem verschiebbaren Sägeschlitten gelagert ist, und bei der das Schutzgehäuse eine Austrittsöffnung für das Sägeblatt aufweist. Um eine automatische Anpassung der jeweiligen Position des Schutzgehäuses an die Dicke zu zersägender Werkstücke zu erreichen, ist vorgesehen, daß das Schutzgehäuse aus zwei Teilen besteht, daß ein erster Gehäuseteil fest mit dem Sägeschlitten verbunden ist, daß ein zweiter, die Austrittsöffnung für das Sägeblatt aufweisender Gehäuseteil den ersten Gehäuseteil in Form einer Manschette teleskopierend umfaßt und mittels einer Gleitführung relativ zum ersten Gehäuseteil verschiebbar ist, und daß der zweite Gehäuseteil an seiner den Sägeschlitten zugewandten Seite einen zur Austrittsöffnung quer verlaufenden Schlitz aufweist, der die Sägewelle umfaßt und an der Austrittsöffnung geschlossen ist.

./...

**Fig. 1**

A 45 358 m
m - 192
4. November 1982

Anmelder: Chr. Eisele
Maschinenfabrik GmbH & Co. KG
Nürtinger Straße 9 - 15
7316 Köngen

B e s c h r e i b u n g :

Schutzgehäuse für das Sägeblatt
einer Kreissäge

Die Erfindung betrifft ein Schutzgehäuse für das
Sägeblatt einer Kreissäge, bei der das Sägeblatt am
freien Ende einer Sägewelle befestigt ist, die ihrerseits freitragend an einem verschiebbaren Sägeschlitten gelagert ist, und bei der das Schutzgehäuse eine Austrittsöffnung für den schneidenden,
mit Zähnen versehenen Bereich des Sägeblattes aufweist.

Bekannte Schutzgehäuse dieser Art (DE-GM 78 37 368)
müssen jeweils in Abhängigkeit von der Dicke des
zu zersägenden Werkstückes eingestellt und am Sägeschlitten arretiert werden. Werden anschließend
Werkstücke geringerer Dicke gesägt, so wird die
erforderliche Nachverstellung des Schutzgehäuses
häufig nicht ausgeführt, so daß das Gehäuse in
seiner auf eine größere Werkstückdicke eingestellten
Position verbleibt, in welcher es aber seine Schutzfunktion nicht mehr voll ausüben kann.

A 45 358 m
m - 192
4. November 1982

Es ist Aufgabe der Erfindung, ein gattungsgemäßes
Schutzgehäuse vorzuschlagen, das keiner Einstellung
am Sägeschlitten auf verschiedene Werkstückdicken
bedarf.

Die Aufgabe wird erfindungsgemäß dadurch gelöst, daß
das Schutzgehäuse aus zwei Gehäuseteilen besteht,
daß ein erster Gehäuseteil fest mit dem Sägeschlitten
verbunden ist, daß ein zweiter, die Austrittsöffnung
für das Sägeblatt aufweisender Gehäuseteil dem ersten
Gehäuseteil in Form einer Manschette teleskopierend
umfaßt und mittels einer Gleitführung relativ zum
ersten Gehäuseteil verschiebbar ist, und daß der
zweite Gehäuseteil an seiner dem Sägeschlitten zugewandten Seite einen zur Austrittsöffnung quer verlaufenden Schlitz aufweist, der die Sägewelle umfaßt
und an der Austrittsöffnung geschlossen ist.

Die nachstehende Beschreibung einer bevorzugten Ausführungsform der Erfindung dient im Zusammenhang mit
beiliegender Zeichnung der weiteren Erläuterung. Es
zeigen:

Fig. 1    eine schaubildliche Ansicht eines
          Schutzgehäuses für ein Kreissägeblatt;

Fig. 2    eine Vorderansicht des Schutzge-
          häuses;

- 6 -

A 45 358 m
m - 192
4. November 1982

Fig. 3        eine Schnittansicht entlang der
             Linie 3-3 in Fig. 2;

Fig. 4        eine Seitenansicht in Richtung des
             Pfeiles A in Fig. 2;

Fig. 5        eine Schnittansicht entlang der
             Linie 5-5 in Fig. 2 und

Fig. 6        eine Rückansicht des Schutzgehäuses
             in Richtung des Pfeiles B in Fig. 4.

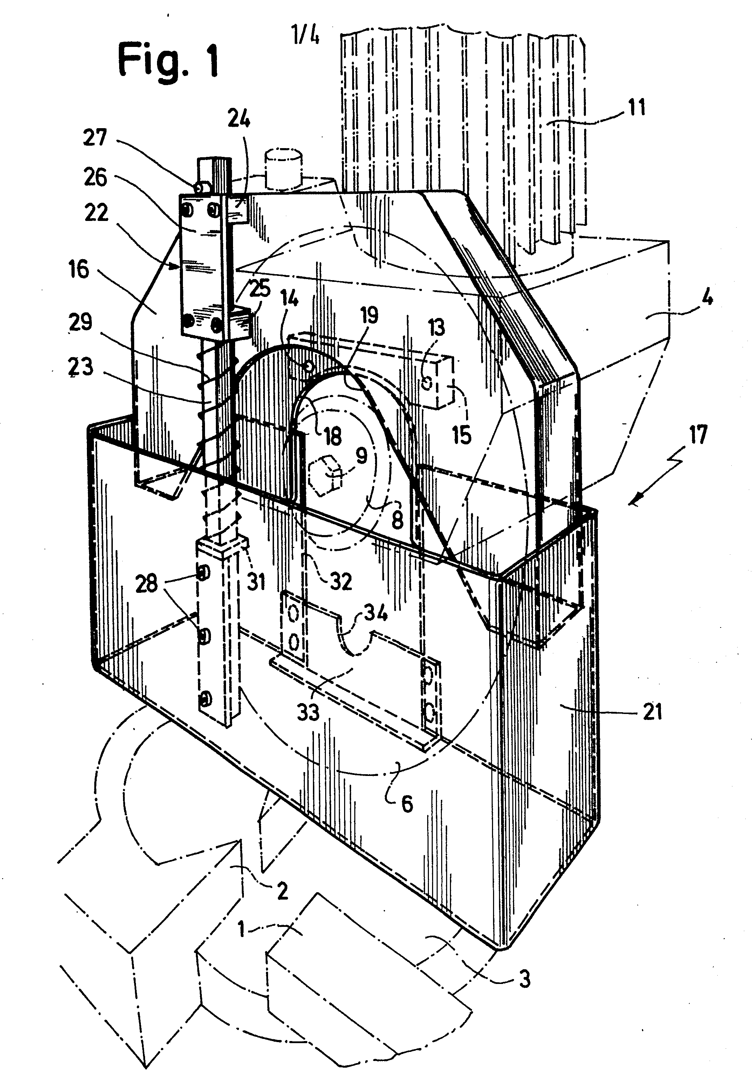

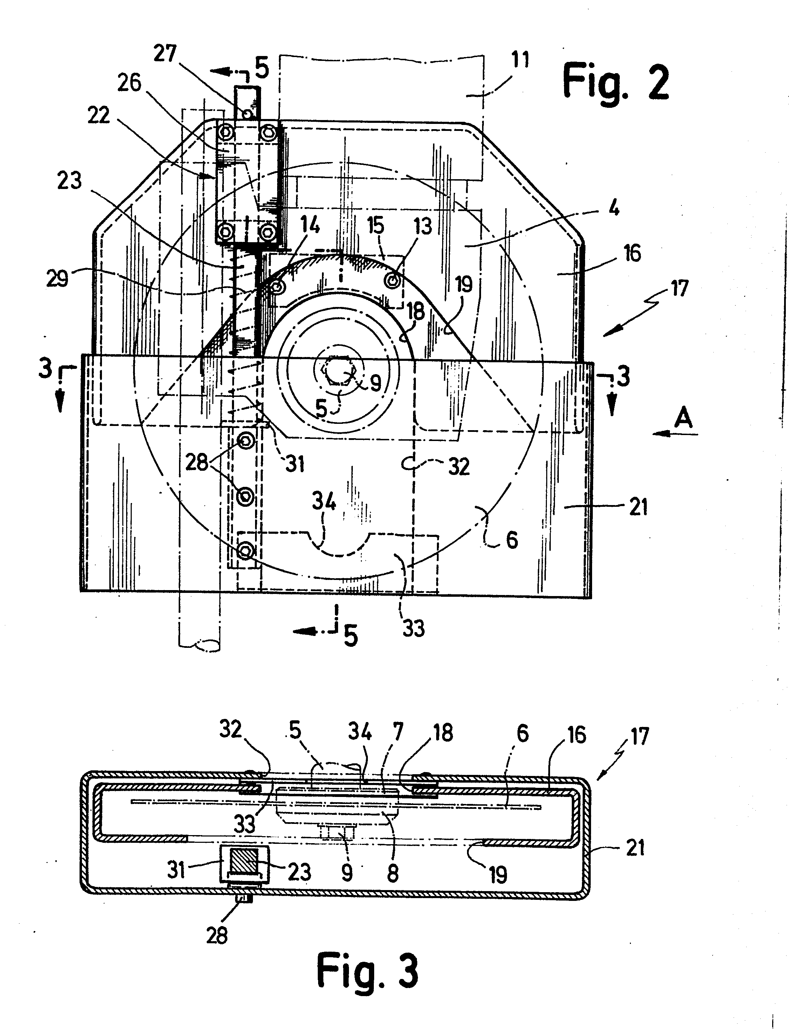

Fig. 1 zeigt strichpunktiert Teile des Maschinengestells einer Kreissäge. Ein zu zersägendes, beispielsweise aus Metall bestehendes Werkstück kann
zwischen Spannbacken 1, 2 auf einem Maschinentisch 3
festgespannt werden. Ein mit Hilfe einer Führung in
an sich bekannter Weise vertikal hin- und herbewegbarer Sägeschlitten 4 dient der freitragenden Lagerung einer Sägewelle 5 (vgl. beispielsweise auch
Fig. 3), an deren freiem Ende ein Kreissägeblatt 6
zwischen Flanschen 7, 8 befestigt ist. Der Flansch 7
ist mit der Welle 5 einstückig. Eine Schraube 9
hält die ganze Anordnung zusammen und ermöglicht
ein Auswechseln des Sägeblattes 6. Der einen Antriebsmotor 11 für das Sägeblatt 6 tragende Sägeschlitten
4 wird zum eingespannten Werkstück hin abgesenkt,
bis dieses vom rotierenden Sägeblatt 6 durchtrennt

A 45 358 m
m - 192
4. November 1982

ist. Anschließend wird der Schlitten 4 wieder nach
aufwärts in seine Ausgangsposition zurückverstellt.
Die hier beschriebene Kreissäge weist einen in
vertikaler Richtung beweglichen Sägeschlitten 4 auf.
Die Erfindung ist in gleicher Weise jedoch auch für
Kreissägemaschinen geeignet, bei denen der Schlitten
in anderer, beispielsweise horizontaler Richtung,
relativ zum Werkstück hin- und herbewegbar ist.

Am Sägeschlitten 4 ist mittels Schrauben 13, 14 unter
Zwischenschaltung eines blockartigen Abstandsgliedes
15 ein erster Gehäuseteil 16 eines das Sägeblatt 6
abdeckenden Schutzgehäuses 17 freitragend gelagert,
wobei die Befestigung an einer dem Sägeschlitten 4
zugekehrten Rückwand des Gehäuseteils 16 erfolgt.
Der kastenförmig ausgebildete Gehäuseteil 16 umschließt den oberen Teil des Sägeblattes 6 in Gestalt eines "U". An der Rückseite weist der Gehäuseteil 16 eine Ausnehmung 18 auf (Fig. 2, 3 und 6),
welche die Sägewelle 5 mit den Flanschen 7 und 8
umschließt. Die Vorderseite des Gehäuseteils 16
hat eine größere Ausnehmung 19 mit schräg verlaufenden Flanken. Diese Ausnehmung 19 ermöglicht unter
Verwendung eines Werkzeuges das Lösen der Schraube
9 und das Auswechseln des Sägeblattes 6.

Der erste Gehäuseteil ist in seinem unteren Bereich
von einem zweiten, ebenfalls kastenartig ausgebildeten Gehäuseteil 21 mit Abstand umschlossen.

A 45 358 m
m - 192
4. November 1982

Das Gehäuseteil 21 hat die Form einer den ersten
Gehäuseteil 16 mit Abstand umfassenden Manschette,
deren Unterseite die Austrittsöffnung für das Sägeblatt 6 bildet. Die Manschette ist in noch zu beschreibender Weise teleskopierend über den ersten
Gehäuseteil 16 geschoben und kann mittels einer noch
zu beschreibenden Gleitführung relativ zu diesem
Gehäuseteil verschoben werden. Während der erste
Gehäuseteil 16 beispielsweise aus Blech besteht,
wird der zweite Gehäuseteil 21 vorzugsweise aus
durchsichtigem Kunststoff gefertigt, so daß der
Arbeitsbereich des Sägeblatts 6 und sein Angriff
am Werkstück unbehindert beobachtet werden kann.

An der Vorderseite des ersten Gehäuseteils 16 ist
in einer einfachen Gleitführung 22 ein Vierkantstab
23 vertikal auf- und abverschiebbar gehalten. Die
Gleitführung 22 umfaßt vier seitliche Führungselemente, von denen in Fig. 1 lediglich die Elemente
24 und 25 sichtbar sind. Die seitlichen Führungselemente sind von einer Führungsplatte 26 überdeckt.
Zwischen den seitlichen Führungselementen und der
Platte 26 ist der Stab 23 auf- und abverschiebbar.
Ein gegebenenfalls einstellbarer Anschlag 27, der
sich an der Oberkante der Platte 26 abstützt, bestimmt die untere Endlage des Vierkantstabes 23.
Am Vierkantstab 23 ist mittels Schrauben 28 der
zweite oder untere Gehäuseteil 21 befestigt. Eine
den Stab 23 umgebende Feder 29, die sich einerseits

A 45 358 m
m - 192
4. November 1982

an der Gleitführung 22 und andererseits an einem
mit dem Stab 23 fest verbundenen Flansch 31 abstützt,
hält den zweiten Gehäuseteil 21 mit Vorspannung in
seiner unteren Ruhelage, in welcher dieser Gehäuseteil das Sägeblatt 6 vollständig abdeckt. Bei der
dargestellten Ausführungsform einer Kreissäge mit
vertikal beweglichem Schlitten 4 kann die Feder 29
auch entfallen, da der zweite Gehäuseteil 21 aufgrund seines Eigengewichtes von alleine in seine
untere Ruhelage zurückkehrt. Bei der dargestellten
Ausführungsform umfaßt der manschettenartige, untere
Gehäuseteil 21 den ersten, oberen Gehäuseteil 16
von außen. Bei einer anderen Ausführungsform kann
auch in Betracht gezogen werden, den zweiten Gehäuseteil 21 im Innern des entsprechend groß ausgebildeten
ersten Gehäuseteils 16 teleskopierend anzuordnen.

Wie insbesondere aus Fig. 1 hervorgeht, weist der
zweite, untere Gehäuseteil 21 an seiner Rückseite
einen breiten Schlitz 32 auf, der in seinem unteren
Bereich mit dem vorerwähnten Schlitz 18 im ersten
Gehäuseteil 16 zusammenfällt. Dieser Schlitz 32 ermöglicht ein unbehindertes Verschieben des unteren
Gehäuseteils 21 an der Sägewelle 5 und an der Halterung 15 vorbei nach oben. Wie dargestellt, ist der
Schlitz 32 unten im Bereich der Austrittsöffnung
für das Sägeblatt 6 durch einen im Querschnitt
winkelförmig ausgebildeten Steg 33 verschlossen.
Es wurde gefunden, daß dieser Verschluß des

A 45 358 m
m - 192
4. November 1982

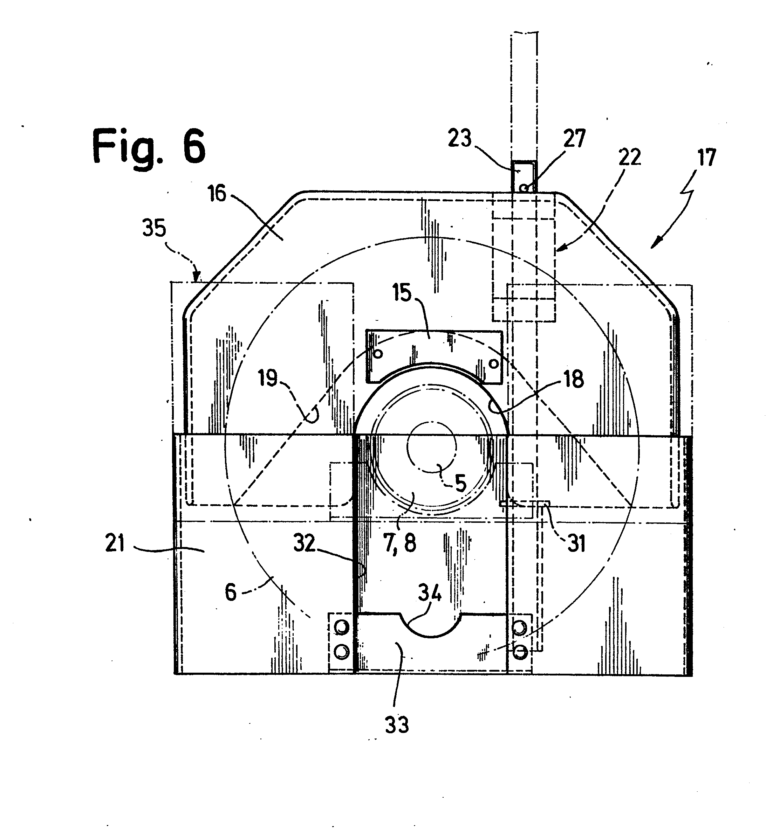

Schlitzes 32 an der Rückseite des unteren Gehäuseteils 21 eine ausreichende Sicherheit gegen ein
unbeabsichtigtes Berühren der Schneidkante des Sägeblattes 6 darstellt. Der Steg 33 weist an seiner
Oberkante eine kreisbogenförmige Aussparung 34 auf,
die sich um die Sägewelle 5 legt, wenn der Gehäuseteil 21 in seine maximale Hochstellung verschoben
ist. Diese Stellung ist in Fig. 6 strichpunktiert
dargestellt und mit dem Bezugszeichen 35 bezeichnet.

Wie insbesondere aus Fig. 2 und 6 hervorgeht, ist
der Steg zwischen der Ausnehmung 34 und seiner
Unterkante so breit ausgebildet, daß er die Schneidkante des Sägeblattes 6 in der Nähe der Austrittsöffnung seitlich vollständig abdeckt. Es wurde gefunden, daß aber auch dann, wenn die Ausnehmung 34
in der unteren Ruhestellung des Gehäuseteils 21 bis
unterhalb der Schneidkante des Sägeblattes 6 reicht,
ein ausreichender Berührungsschutz gewährleistet ist,
zumal der Steg 33 an der Rückseite des unteren Gehäuseteils 21 liegt, an welcher ohnehin normalerweise keine Hantierungen vorgenommen werden.

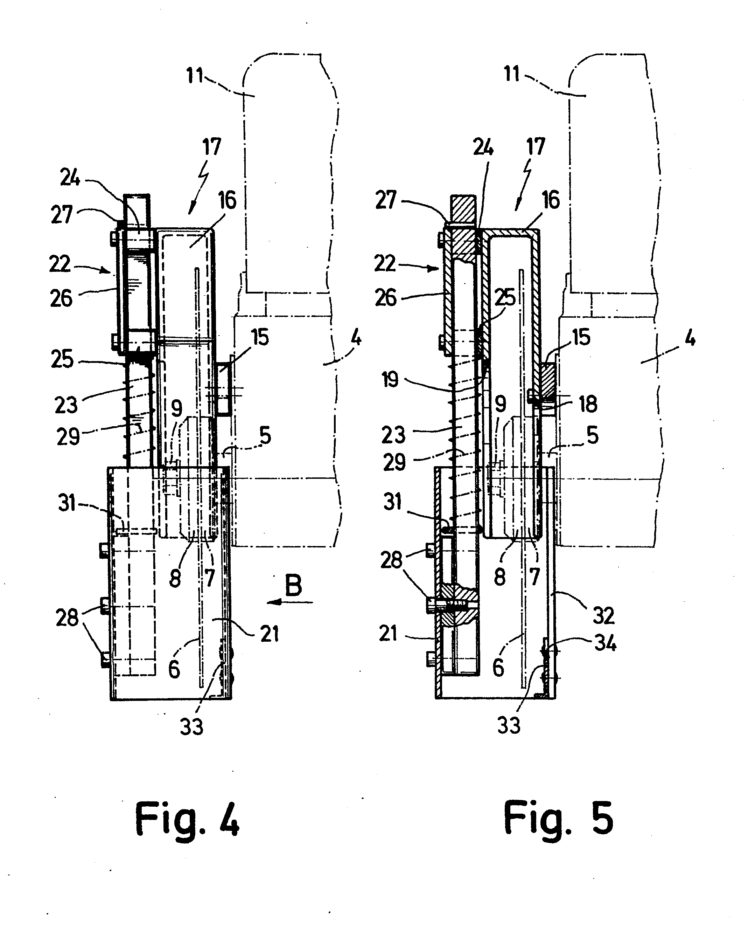

Bei der dargestellten und beschriebenen Ausführungsform einer Kreissäge - vgl. insbesondere Fig. 4 und
5 - ist zwischen dem mit der Sägewelle 5 verbundenen,
am Sägeblatt 6 anliegenden Flansch 7 und dem
Schlitten 4 ein Zwischenraum vorgesehen, in dem
die Rückwand des zweiten Gehäuseteils 21 mit dem

A 45 358 m
m - 192
4. November 1982

daran befestigten Steg 23 beim Hochschieben des
Gehäuseteils 21 Platz findet. Fehlt dieser Zwischenraum, so muß die Ausnehmung 34 am Steg 33 entsprechend
tiefer ausgebildet werden.

Der zweite Gehäuseteil 21 besteht, wie bereits festgestellt, vorzugsweise aus durchsichtigem Material.
Hierfür eignet sich beispielsweise Kunststoff oder
auch Lochblech. Bei der dargestellten Ausführungsform hat der untere Gehäuseteil 21 an seiner Vorderseite eine geradlinig und horizontal verlaufende
Oberkante. Die im ersten Gehäuseteil 16 vorgesehene
Öffnung 19 ist ausreichend groß, um einen Sägeblattwechsel auszuführen. Nötigenfalls kann eine entsprechende, dem gleichen Zweck dienende Ausnehmung
auch an der Vorderseite des Gehäuseteils 21, ausgehend von dessen geradliniger Oberkante, vorgesehen werden.

Beim Absenken des Sägeschlittens 4 setzt sich der
zweite Gehäuseteil 21 mit seiner Austrittsöffnung
auf das zu zersägende Werkstück auf und schiebt
sich beim Eindringen des Sägeblatts 6 in das Werkstück automatisch nach oben.

A 45 358 m
m - 192
4. November 1982

Anmelder: Chr. Eisele
Maschinenfabrik GmbH & Co. KG
Nürtinger Straße 9 - 15
7316 Köngen


P a t e n t a n s p r ü c h e :


1. Schutzgehäuse für das Sägeblatt einer Kreissäge,
bei der das Sägeblatt am freien Ende einer Sägewelle befestigt ist, die ihrerseits an einem
verschiebbaren Sägeschlitten gelagert ist, und
bei der das Schutzgehäuse eine Austrittsöffnung
für das Sägeblatt aufweist,
d a d u r c h   g e k e n n z e i c h n e t ,
daß das Schutzgehäuse (17) aus zwei Gehäuseteilen (16,21) besteht, daß ein erster Gehäuseteil (16) fest mit dem Sägeschlitten (4) verbunden ist, daß ein zweiter, die Austrittsöffnung für das Sägeblatt (6) aufweisende Gehäuseteil (21) den ersten Gehäuseteil (16) in Form
einer Manschette teleskopierend umfaßt und mittels
einer Gleitführung (22) relativ zum ersten Gehäuseteil (16) verschiebbar ist, und daß der
zweite Gehäuseteil (21) an seiner dem Sägeschlitten (4) zugewandten Seite einen zur Austrittsöffnung her verlaufenden Schlitz (32) aufweist, der die Sägewelle (5) umfaßt und an der
Austrittsöffnung geschlossen ist.

A 45 358 m
m - 192
4. November 1982

2. Schutzgehäuse nach Anspruch 1, dadurch gekennzeichnet, daß die Gleitführung (22) wenigstens eine
   mit dem zweiten Gehäuseteil (21) starr verbundene
   Führungsschiene (23) umfaßt, die in einem am
   ersten Gehäuseteil (16) befestigten Gleitlager
   (24,25,26) verschieblich ist.

3. Schutzgehäuse nach Anspruch 1 oder 2, dadurch
   gekennzeichnet, daß der zweite Gehäuseteil (21)
   durch Federkraft (29) in seine Ruhelage, in
   welcher er das Sägeblatt (6) vollständig abdeckt,
   vorgespannt ist.

4. Schutzgehäuse nach Anspruch 1, 2 oder 3, dadurch
   gekennzeichnet, daß der Sägeschlitten (4) im
   wesentlichen in senkrechter Richtung verschiebbar
   und der zweite, unten gelegene Gehäuseteil (21)
   durch Schwerkraft in der Ruhestellung gehalten
   ist.

5. Schutzgehäuse nach einem der Ansprüche 1 bis 4,
   dadurch gekennzeichnet, daß an wenigstens einem
   der Gehäuseteile (16,21) eine Aussparung vorgesehen ist, durch welche das freie Ende der Sägewelle (5) zum Zwecke des Sägeblattwechsels zugänglich ist.

A 45 358 m
m - 192
4. November 1982

6. Schutzgehäuse nach einem der voranstehenden Ansprüche, dadurch gekennzeichnet, daß der Schlitz
   (32) des zweiten Gehäuseteils (21) an der Austrittsöffnung des Sägeblatts (6) durch einen
   Steg (33) geschlossen ist.

7. Schutzgehäuse nach Anspruch 6, dadurch gekennzeichnet, daß der Steg eine Ausnehmung (34) zur
   Aufnahme der Sägewelle (5) aufweist.

8. Schutzgehäuse nach Anspruch 6 oder 7, dadurch
   gekennzeichnet, daß der Steg (33) in der Ruhelage
   des zweiten Gehäuseteils (21) die im Schlitz (32)
   freiliegende Schneidkante des Sägeblatts (6)
   vollständig abdeckt.

9. Schutzgehäuse nach einem der voranstehenden Ansprüche, dadurch gekennzeichnet, daß zwischen
   einem am freien Ende der Sägewelle (5) vorgesehenen,
   der Halterung des Sägeblattes (6) dienenden
   Flansch (7) und dem Sägeschlitten (4) ein Zwischenraum vorgesehen ist, in dem der Steg (33) beim
   Zusammenschieben der Gehäuseteile (16,21) eindringt.

1o. Schutzgehäuse nach einem der voranstehenden Ansprüche, dadurch gekennzeichnet, daß der zweite
    Gehäuseteil (21) aus ganz oder teilweise durchsichtigem Material, insbesondere durchsichtigem
    Kunststoff oder Lochblech, besteht.

# Fig. 1

**Fig. 2**

**Fig. 3**

Fig. 4

Fig. 5

# Fig. 6

**Europäisches Patentamt**

## EUROPÄISCHER RECHERCHENBERICHT

Nummer der Anmeldung

| | EINSCHLÄGIGE DOKUMENTE | | EP 83111333.7 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US - A - 3 119 602 (JOHNSON) <br> * Gesamt * <br> -- | 1,2,3 | B 23 D 47/00 <br> B 27 G 19/02 |
| X | DE - A1 - 2 401 260 (BLACK & DECKER) <br> * Gesamt * <br> -- | 1,5,6 | |
| A | DE - A1 - 3 136 591 (BEWO) <br> * Fig. 1 * <br> -- | 1 | |
| A | DE - B - 1 057 772 (STOLTENBERG) <br> * Gesamt * <br> -- | 1,3 | |
| A | GB - A - 1 124 586 (BEVES & CO) <br> * Fig. 4,5 * <br> -- | 1 | RECHERCHIERTE SACHGEBIETE (Int. Cl. 3) |
| A | FR - A - 487 226 (RIO) <br> * Fig. 1,3,4,5-8 * <br> -- | 10 | B 23 D 45/00 <br> B 23 D 47/00 <br> B 27 B 5/00 |
| A | US - A - 3 880 032 (GREEN) <br> * Fig. 1-8 * <br> ---- | 10 | B 27 B 9/00 <br> B 27 G 19/00 |

Der vorliegende Recherchenbericht wurde für alle Patentansprüche erstellt.

| Recherchenort | Abschlußdatum der Recherche | Prüfer |
|---|---|---|
| WIEN | 26-01-1984 | FUCHS |